# EUROPÄISCHE PATENTSCHRIFT

(11) **EP 2 431 260 B1**
(45) Veröffentlichungstag und Bekanntmachung des Hinweises auf die Patenterteilung: **08.01.2020**
(21) Anmeldenummer: 11179714.8
(22) Anmeldetag: 01.09.2011
(51) Int. Cl.: B62D 33/02, B60J 7/16

(54) **Vorrichtung zum Anheben und Absenken eines auf teleskopierbaren Rungen abgestützten Dachs eines Nutzfahrzeugs**
Device to raise and lower the roof of a utility vehicle, the roof being supported on telescopic stanchions.
Dispositif à lever et baisser le toit, supporté par des rangers, d'un véhicule de transport

(30) Priorität: 15.09.2010 DE 102010037553
(43) Veröffentlichungstag der Anmeldung: 21.03.2012
(73) Patentinhaber: F. HESTERBERG & SÖHNE GmbH & Co. KG, 58256 Ennepetal (DE)
(72) Erfinder: Breme, Stefan, 58339 Breckerfeld (DE)
(74) Vertreter: Bungartz Christophersen Partnerschaft mbB Patentanwälte

(56) Entgegenhaltungen:
- EP-A1- 1 544 087
- DE-T2- 3 783 994
- DE-U1- 29 907 916

## Beschreibung

Die Erfindung betrifft eine Vorrichtung zum Anheben und Absenken eines auf teleskopierbaren Rungen abgestützten Dachs eines Nutzfahrzeugs, wobei eine Runge ein Gehäuseelement, ein relativ zu dem Gehäuseelement teleskopierbares Hubelement und einen Kniehebel aufweist, der ein erstes, zwischen einer ersten Einklapp- und einer ersten Ausklapp-Position klappbares und an dem Gehäuseelement angelenktes Hebelglied und ein zweites, mit dem Hubelement verbindbares Hebelglied aufweist, wobei der Kniehebel derart ausgestaltet ist, dass das Anheben des Hubelements durch eine Klappbewegung aus der Einklapp- in die Ausklapp-Position bewirkbar ist, wobei die Runge ferner ein erstes Betätigungselement aufweist, durch dessen Betätigung das Hubelement absenkbar ist, und wobei das erste Hebelglied zur Betätigung des ersten Betätigungselements ein zweites Betätigungselement aufweist.

Eine als teleskopierbare Runge ausgebildete Vorrichtung mit diesen Merkmalen ist aus der EP 1 544 087 B1 bekannt. Bestandteile der Runge sind ein Gehäuseelement, welches sich starr gegenüber der Ladefläche des Nutzfahrzeugaufbaus abstützt, ein in dem Gehäuseelement vertikal geführtes Hubelement, dessen oberes Ende gelenkig oder nicht gelenkig mit dem Fahrzeugdach verbunden ist, sowie eine Kniehebelanordnung, mit deren Hilfe sich das Hubelement und damit das Fahrzeugdach in Bezug auf das Gehäuseelement anheben lässt. Die Kniehebelanordnung weist ein an dem Gehäuseelement angelenktes und zu einem Handhebel verlängertes erstes Hebelglied, und ein über eine Kupplung mit dem Hubelement verbindbares, zweites Hebelglied auf. Bei Betätigung der Kniehebelanordnung kommt es über die Kupplung zu einem vertikalen Mitnehmen des Hubelements, und damit zu einem Anheben des Fahrzeugdachs. Zum Absenken des Dachs aus seiner angehobenen Stellung wird ein gesonderter, in einer Ausnehmung der Kniehebelanordnung angeordneter Betätigungshebel in der vollständig eingeklappten Stellung der Kniehebelanordnung aus dieser heraus geschwenkt. Dies hat zur Folge, dass ein Betätigungsarm einen Ventilschaft einer Kolben- und Zylindereinheit nach oben drückt und sich ein Ventil in der Kolben- und Zylindereinheit öffnet. Das Öffnen des Ventils bewirkt eine Relativbewegung zwischen dem Kolben und dem Zylinder, und damit das Absenken des Hubelements und des Dachs.

Die Höhenverstellung eines Nutzfahrzeugdaches erfolgt zur Erleichterung von Be- und Entladevorgängen des Nutzfahrzeuges. Vor einem Beladevorgang wird das Dach durch eine Art Pumpbewegung des Kniehebelmechanismus angehoben, was durch die derart vergrößerte Zuladeöffnung zu einer Erleichterung der Beladung mit großer und/oder sperriger Ladung führt. Ist der Beladevorgang abgeschlossen und die Ladung günstig verteilt, wird das Dach wieder abgesenkt. Als nachteilig hat sich herausgestellt, dass bei dieser Vorrichtung das Anheben und Absenken des Daches unter dem insbesondere im Speditionsgewerbe üblichen Zeitdruck, nicht anwenderfreundlich genug ist.

Es ist daher die Aufgabe der Erfindung, eine Vorrichtung der eingangs genannten Art bereitzustellen, die sich durch ihre einfache Anwendung auszeichnet.

Diese Aufgabe wird bei einer Vorrichtung der eingangs genannten Art dadurch gelöst, dass das erste und das zweite Betätigungselement derart angeordnet sind, dass bei einer Klappbewegung des ersten Hebelgliedes aus der ersten Ausklapp-Position in die erste Einklapp-Position das erste Betätigungselement bereits kurz vor Erreichen der Einklapp-Position durch das zweite Betätigungselement betätigt wird.

Durch diese Anordnung der Betätigungselemente lassen sich sowohl das Anheben als auch das Absenken des Dachs des Nutzfahrzeugs mit einem einzigen Handgriff zeitsparend ausführen. Die Kniehebelanordnung muss nicht zunächst vollständig eingeklappt werden, um erst anschließend einen in einer Ausnehmung des ersten Hebelgliedes liegenden und somit kleinen, weiteren Betätigungshebel betätigen zu können. Es ist stattdessen möglich, ab einem ersten Klappwinkel von z. B. kleiner als 15° zwischen dem Gehäuseelement und dem ersten Hebelglied das Hubelement abzusenken. Dabei kann sich, muss aber nicht, die Absenkgeschwindigkeit umgekehrt proportional zu dem ersten Klappwinkel verhalten, wodurch sie über eine Betätigung des ersten Hebelglieds steuerbar ist. Die Vorrichtung kann sowohl eigenständig von Beginn an, als auch als Nachrüstung bei bereits vorhandenen Rungen durch Verbindung mit diesen montiert werden.

Bevorzugt ist das erste Betätigungselement als ein nach unten weisender, zur Betätigung relativ zu dem Hubelement nach oben verschiebbarer Zylinderzapfen ausgestaltet. Ein Zylinder bildet eine stabile und kompakte Standardform, welche einfach, beispielsweise durch Öffnungen weiterer Elemente wie Führungen, zu führen ist. Beispielsweise kann der Zylinderzapfen ein nach unten verlängerter Ventilschaft eines Ventils einer hydraulischen Zylinder-Kolben-Einheit sein, bei der eine Verschiebung nach oben zu einer Öffnung des Ventils führt, was wiederum eine Relativbewegung des Kolben gegenüber dem Zylinder bewirkt.

In einer bevorzugten Ausführungsform ist das zweite Betätigungselement an dem ersten Hebelglied zwischen einer seine Grundposition bildenden zweiten Ausklapp-Position und einer zweiten Einklapp-Position schwenkbar gelagert, und es weist einen Steg für den Eingriff in das erste Betätigungselement auf. Dabei kann das zweite Betätigungselement beispielweise durch ein Federelement in die zweite Ausklapp-Position gedrückt werden, in welcher sich der Steg von dem ersten Hebelglied in Richtung des Gehäuseelements und somit des ersten Betätigungselements in einem zweiten Klappwinkel abspreizt. Auch ein Steg bildet eine stabile Standardform, welche zum Einen einfach zu fertigen ist und zum Anderen einen zuverlässigen Eingriff mit dem ersten Betätigungselement gewährleisten kann.

Bei einer weiteren Ausführungsform ist das zweite Betätigungselement derart angeordnet, dass das erste Betätigungselement in der ersten Einklapp-Position betätigbar ist. Dies ermöglicht, dass für ein vollständiges Absenken des Hubelements bis zu seiner unteren Hubbegrenzung das Kniehebelelement lediglich durch eine kurze Bewegung in die erste Einklapp-Position bewegt werden muss. Dies kann geschehen, indem in der ersten Einklapp-Position die beiden Betätigungselemente im Eingriff bleiben, d. h. das erste von dem zweiten Betätigungselement andauernd betätigt, z.B. nach oben verschoben, wird. Im Gegensatz zu der Vorrichtung gemäß EP 1 544 087 B1 sind ein längeres Halten eines Betätigungshebels durch einen Anwender während des Absenkvorgangs, und ein sich anschließender weiterer Anwendungsschritt, beispielsweise eine Verstauposition des Betätigungshebels, nicht erforderlich.

Um während des Absenkens des Daches eine Höheneinstellung auch in jeder Zwischenhöhe zu ermöglichen, ist es bei einer alternativen Ausführungsform vorteilig, dass das zweite Betätigungselement derart angeordnet ist, dass das erste Betätigungselement in der ersten Einklapp-Position nicht betätigbar ist. Beispielsweise durch eine spezielle Ausgestaltung einer Kontur des ersten und/oder des zweiten Betätigungselements wird der Eingriff der beiden Betätigungselemente in der ersten Einklapp-Position wieder gelöst. Beispielweise kann der Eingriff der Betätigungselemente bei ersten Klappwinkeln von 15° bis 3° bei ersten Klappwinkeln von 2° bis 0° wieder gelöst sein. Dabei kann die zweite Einklapp-Position des zweiten Betätigungselements seitlich versetzt neben dem ersten Betätigungselement angeordnet sein.

In einer weiteren alternativen Ausführungsform ist das erste Betätigungselement mit einem ersten Ende eines zweigliedrigen Kettenelements verbunden, welches an seinem zweiten Ende schwenkbar und gehäusefest angeordnet ist und bei nicht betätigtem ersten Betätigungselement die zwei Kettenglieder gegeneinender V-förmig in Richtung des ersten Hebelglieds schwenkbar sind, und dass das erste Hebelglied das zweite Betätigungselement bildet, durch welches die verschwenkten Kettenglieder zur Betätigung des ersten Betätigungselements in eine im Wesentlichen längs zueinander ausgewuchteten Position drückbar sind. Das Kettenelement in der im Wesentlichen linienförmigen ausgestreckten Position weist eine größere Ausdehnung in Längsrichtung und damit in Betätigungsrichtung des ersten Betätigungselements auf, als in der zusammengestauchten Position mit zueinander verdrehten Kettengliedern. Die Differenz der Längsausdehnung in Längsrichtung des ersten Betätigungselements zwischen diesen beiden Positionen entspricht dem Betätigungshub des ersten Betätigungselements. Beispielsweise kann eine Kontur des ersten Hebelglieds das zweite Betätigungselement bilden, wobei sobald die Kontur die ihr V-Förmig entgegenragendeden Kettenglieder bei einer Bewegung des ersten Hebelglieds in die erste Einklapp-Position kontaktiert und bewegt, das erste Betätigungselement entsprechend der Streckung der Kettenglieder betätigt wird.

Von Vorteil ist, wenn die Vorrichtung eine einen Betätigungshubweg des ersten Betätigungselements einstellende Justiervorrichtung aufweist. Beispielsweise über in dem ersten Hebelglied und/oder in dem Gehäuseelement angeordnete Gewindeelemente kann durch Veränderung der Position der Betätigungselemente und/oder des Kettenelements der Betätigungshub variierbar sein. Insbesondere bei längerer Nutzung der Vorrichtung kann eine Nachjustierung aufgrund von sich einstellenden Deformierungen und/oder Abnutzungen nötig werden.

Weitere Vorteile und Einzelheiten ergeben sich aus der nachfolgenden Beschreibung von Ausführungsbeispielen der Erfindung, wobei auf die Zeichnungen Bezug genommen wird. Darin zeigen:
- Fig. 1a und 1b: Gesamtdarstellungen einer ersten Ausführungsform der Vorrichtung mit dem Kniehebel in der ersten Einklapp- und der ersten Ausklapp-Position;
- Fig. 2: Eine Detaildarstellung der ersten Ausführungsform im unteren Bereich der Vorrichtung;
- Fig. 3a und 3b: Verschiedene den Ablauf der Betätigung des ersten Betätigungselements durch das zweite Betätigungselements zeigende Detaildarstellungen der ersten Ausführungsform;
- Fig. 4a, 4b und 4c: Verschiedene, den Ablauf der Betätigung des ersten Betätigungselements durch das zweite Betätigungselements zeigende Detaildarstellungen einer zweiten Ausführungsform;
- Fig. 5a und 5b: Gesamtdarstellungen einer dritten Ausführungsform mit dem Kniehebel in der ersten Einklapp- und der zweiten Ausklapp-Position;
- Fig. 6: Eine Detaildarstellung der dritten Ausführungsform;
- Fig. 7a, 7b und 7c: Verschiedene den Ablauf der Betätigung des ersten Betätigungselements durch das zweite Betätigungselements zeigende Detaildarstellungen der dritten Ausführungsform.

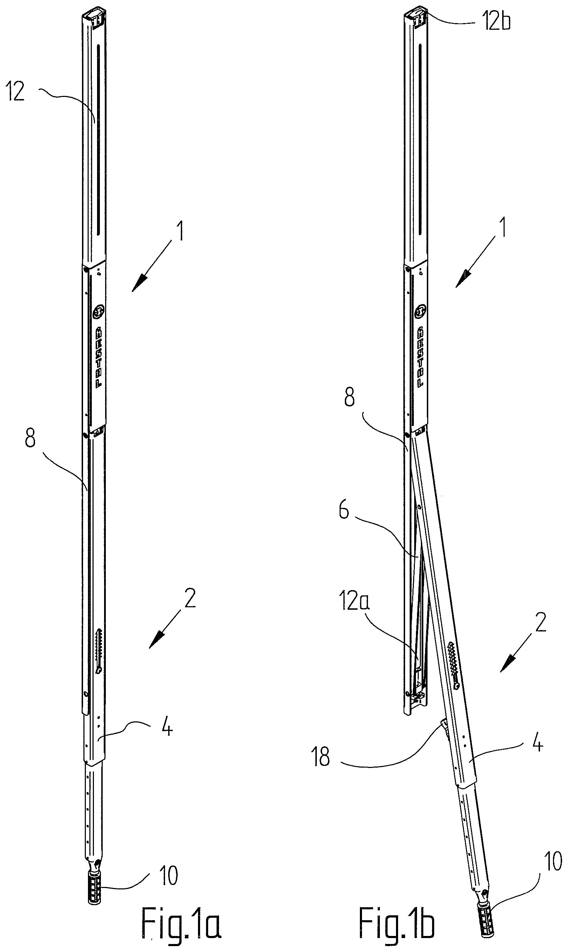

Die Figuren 1a und 1b zeigen die Gesamtdarstellung einer ersten Ausführungsform einer ein Fahrzeugdach tragenden Runge 1, wobei Figur 1a die Vorrichtung in einer ersten Einklapp-Position und Figur 1b in einer ersten Ausklapp-Position des Kniehebels 2 zeigt. Der Kniehebel 2 ist eine Anordnung aus einem ersten Hebelglied 4, und einem zweiten Hebelglied 6. Das erste Hebelglied 4 ist an seinem oberen Ende an einem Gehäuseelement 8 schwenkbar gelagert. Das Gehäuseelement 8 ist Bestandteil des starren Grundkörpers der Runge 1, und ist z. B. an oder in der Höhe der Ladefläche des Nutzfahrzeugs befestigt.

An seinem unteren Ende weist das Hebelglied 4 eine Handhabe 10 auf. Das zweite Hebelglied 6 ist an seinem oberen Ende schwenkbar an dem ersten Hebelglied 4 im Bereich zwischen dessen beiden Enden gelagert. Das andere, untere Ende des zweiten Hebelglieds 6 ist schwenkbar an einem Hubelementabschnitt 12a gelagert, welcher auf- und abbeweglich in der Runge 1 geführt ist. Dieser Hubelementabschnitt 12a ist an seinem auf der Zeichnung verdeckten, oberen Ende über eine Mitnehmerkupplung mit einem Hubelement 12 verbindbar, welches auf- und abbeweglich in der Runge geführt ist. Das Hubelement 12 stützt das Fahrzeugdach ab. Mit dem Anheben des Hebelglieds 6 und des damit gelenkig verbundenen Hubelementabschnitts 12a kommt es zugleich zu einem Mitnehmen des Hubelements 12, und damit des Dachs, welches sich oben auf dem Hubelement 12 abstützt.

Das Hubelement 12 ist in der Längsrichtung in dem Gehäuseelement 8 geführt und ragt im Wesentlichen mit einem oberen Hubelementabschnitt 12b, welcher die Abstützung zum Fahrzeugdach herstellt, aus dem fahrzeugfesten Gehäuseelement 8 heraus..

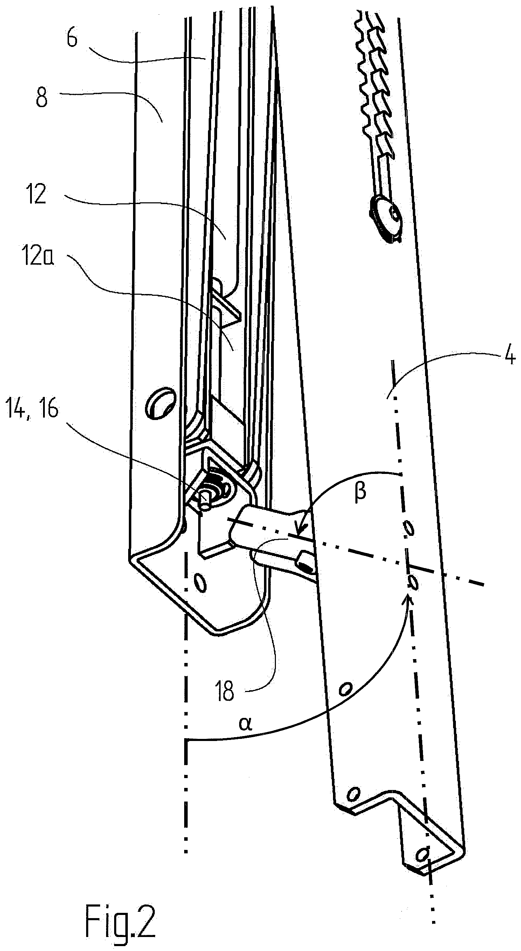

Figur 2 zeigt eine Detaildarstellung der in den Figuren 1a und 1b gezeigten ersten Ausführungsform. Es zeigt das erste Betätigungselement 14 als nach unten weisender freiliegender Zylinderzapfen 16, welcher innerhalb des Gehäuseelements 8 aus dem Hubelement 12 hervorragt. Das erste Hebelglied 4 des Kniehebelelements 2 findet sich in der in Figur 2 gezeigten Detaildarstellung in einer ersten Ausklapp-Position, in welcher der erste Klappwinkel α noch zu groß ist für einen Eingriff des zweiten Betätigungselements 18 mit dem ersten Betätigungselement 14. Das zweite Betätigungselement 18 befindet sich in der zweiten Ausklapp-Position, in der es mit dem ersten Hebelglied 4 einen zweiten Klappwinkel β aufspannt.

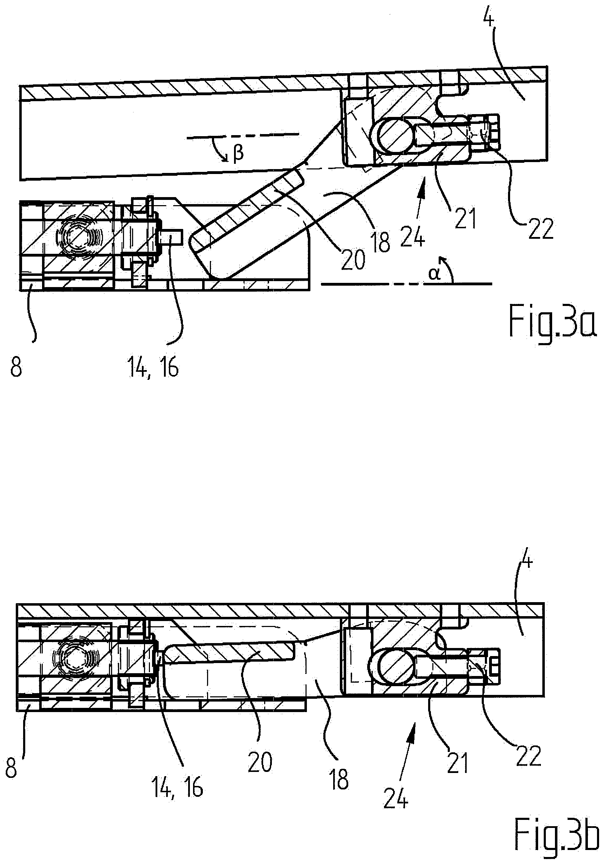

Die Figuren 3a und 3b zeigen verschiedene, den Ablauf der Betätigung des ersten Betätigungselements 14 durch das zweite Betätigungselement 18, insbesondere durch einen Steg 20 eines U-Profils. Während die Figur 3a der erste Klappwinkel α zwischen der Längsachse des ersten Hebelglieds 4 und der Längsachse des Gehäuseelements 8 noch zu groß ist, um den Zylinderzapfen 16 zu betätigen, zeigt Figur 3b sowohl das erste Hebelglied 4 in der ersten Einklapp-Position, als auch das zweite Betätigungselement 18 in der zweiten Einklapp-Position, in welcher dieser den Zylinderzapfen 16 durch eine maximale Verschiebung betätigt. Die Figuren 3a und 3b zeigen ferner das an dem ersten Hebelglied 4 festgelegte erste Gewindeelement 21 sowie das zweite Gewindeelement 22 der Justiervorrichtung 24.

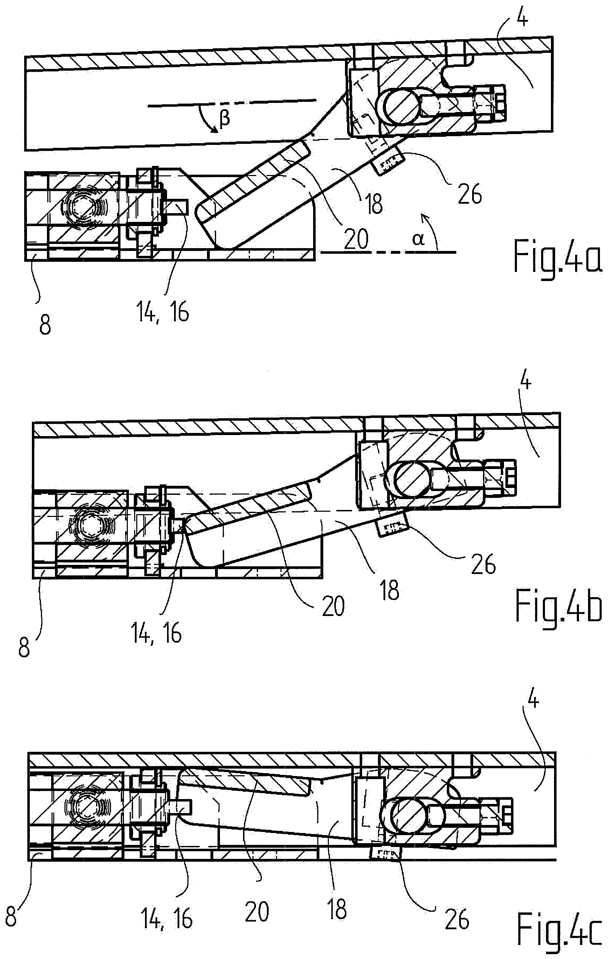

Die Figuren 4a bis 4c zeigen entsprechend den Figuren 3a und 3b den Ablauf der Betätigung des ersten Betätigungselements 14 durch das zweite Betätigungselement 18 einer zweiten Ausführungsform, bei welcher das zweite Betätigungselement 18 ein erstes Konturelement 26 aufweist. Dies führt dazu, dass in der in Figur 4c gezeigten Position, d. h. in der ersten Einklapp-Position des ersten Hebelglieds 4 und in der zweiten Einklapp-Position des zweiten Betätigungselements 18, der Steg 20 das erste Betätigungselement 14 nicht mehr betätigt, sondern durch in Kontakt des Konturelements 26 mit dem Gehäuseelement 8 das zweite Betätigungselement 18 bei dieser zweiten Ausführungsform weiter eingeklappt wird als in der in den Figuren 3a und 3b gezeigten ersten Ausführungsform, sodass der Steg 20 relativ zu dem Zylinderzapfen 16 seitlich versetzt wird. Das Konturelement 26 kann beispielsweise durch ein weiteres Gewindeelement realisiert werden, was wiederum eine Justierung der Position des zweiten Betätigungselements 18 ermöglicht.

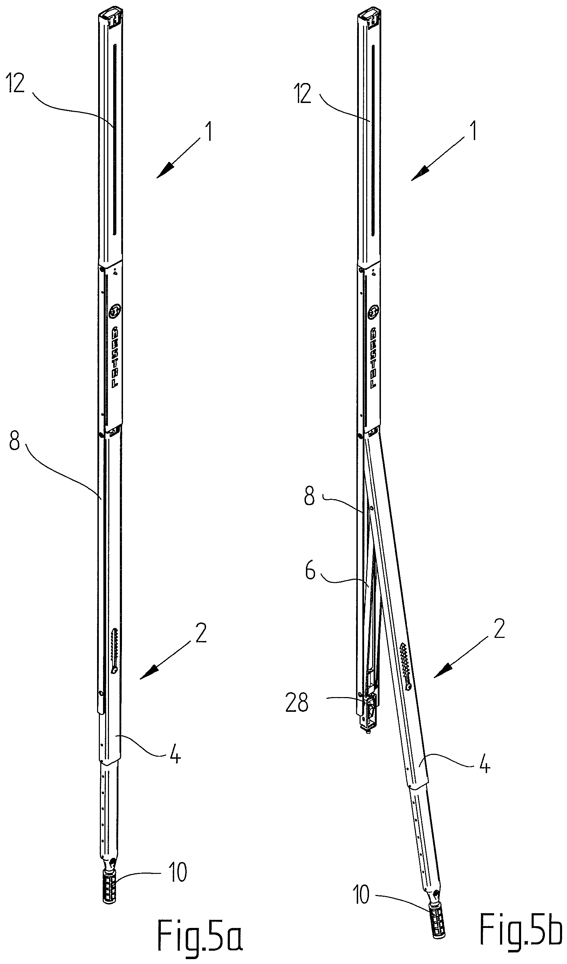

Figuren 5a und 5b zeigen den Gesamtdarstellungen in Figur 1a und Figur 1b der ersten Ausführungsform entsprechend eine dritte Ausführungsform mit einem Kettenelement 28.

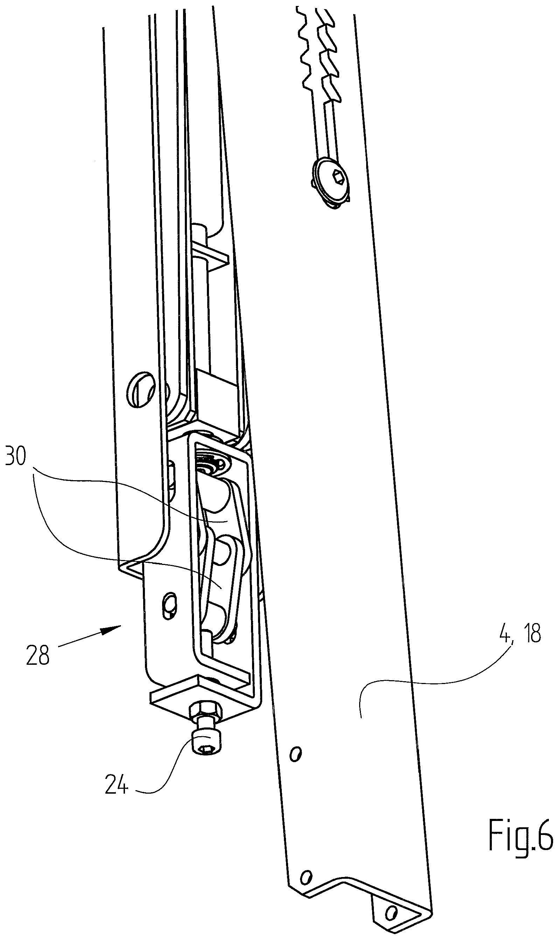

Figur 6 zeigt eine Detaildarstellung dieser dritten Ausführungsform. Das Kettenelement 28 besteht aus zwei schwenkbar miteinander verbundenen Kettengliedern 30, wobei das eine Kettenglied 30 mit dem in Figur 6 nicht erkennbaren Zylinderzapfen 16 und das andere Kettenglied 30 mit der hier gehäusefesten Justiervorrichtung 24 schwenkbar verbunden ist. Bei der dritten Ausführungsform wird das zweite Betätigungselement 18 durch das erste Hebelglied 4 gebildet.

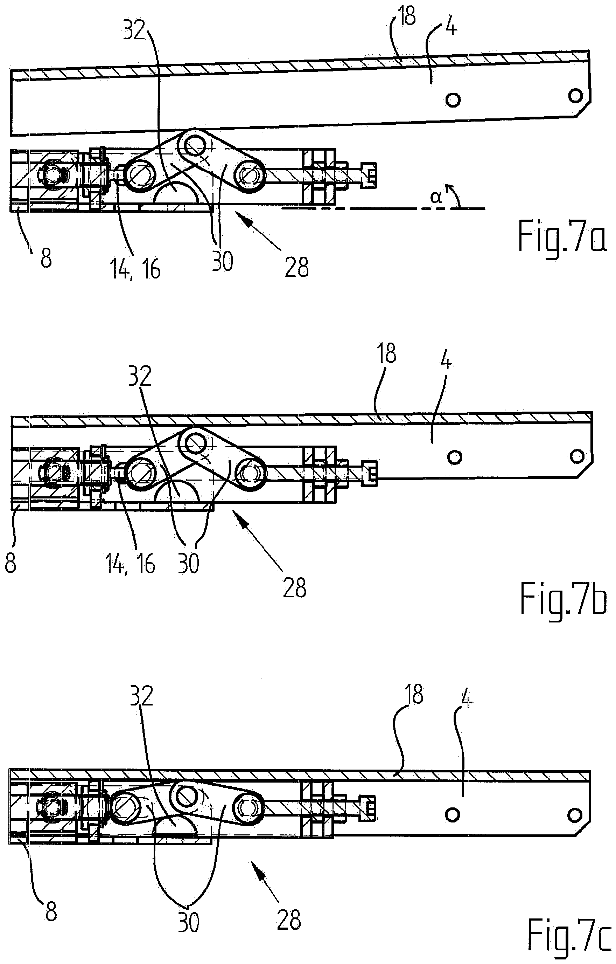

Figuren 7a bis 7c zeigen verschiedene Abläufe der Betätigung des ersten Betätigungselements durch das zweite Betätigungselement dieser dritten Ausführungsform. In Figur 7a ist das erste Hebelglied 4, dessen Kontur das zweite Betätigungselement 18 bildet, noch zu weit ausgeklappt, um die V-förmig zueinander verdrehten, in Richtung des zweiten Betätigungselements 18 herausragenden Kettenglieder 30 des Kettenelements 28 zu kontaktieren. Figur 7b hingegen zeigt das erste Hebelglied 4 in einer Position, in der das zweite Betätigungselement 18 das Kettenglied gerade berührt, jedoch dieses noch nicht bewegt. Figur 7c zeigt die dritte Ausführungsform in der ersten Einklapp-Position des Kniehebelelements. Die das zweite Betätigungselement 18 bildende Kontur des ersten Hebelglieds 4 drückt die Kettenglieder 30 in eine im Wesentlichen linienförmige, d. h. in ihrer Längsausdehnung nahezu fluchtende Position, was zu einer Vergrößerung der Ausdehnung des Kettenglieds 30 in Längsrichtung des Zylinderzapfens 16 bewirkt, und dieser folglich durch das Kettenglied verschoben, d. h. betätigt wird. Die dritte Ausführungsform weist ferner ein zweites Konturelement 32 des Gehäuseelements 8 auf. Dieses ist derart angeordnet, dass die Kettenglieder 30 sich nicht in die entgegengesetzte Richtung, d. h. weg von dem ersten Hebelglied 4, verdrehen können.

### Bezugszeichenliste

- 1: Runge
- 2: Kniehebel, Kniehebelanordnung
- 4: Erstes Hebelglied
- 6: Zweites Hebelglied
- 8: Gehäuseelement
- 10: Handhabe
- 12: Hubelement
- 12a: unterer Hubelementabschnitt
- 12b: oberer Hubelementabschnitt
- 14: Erstes Betätigungselement
- 16: Zylinderzapfen
- 18: Zweites Betätigungselement
- 20: Steg
- 21: Erstes Gewindeelement
- 22: Zweites Gewindeelement
- 24: Justiervorrichtung
- 26: Erstes Konturelement
- 28: Kettenelement
- 30: Kettenglied
- 32: Zweites Konturelement

- α: Klappwinkel
- β: Klappwinkel

## Patentansprüche

1. Vorrichtung zum Anheben und Absenken eines auf teleskopierbaren Rungen abgestützten Dachs eines Nutzfahrzeugs, wobei eine Runge (1) ein Gehäuseelement (8), ein relativ zu dem Gehäuseelement (8) teleskopierbares Hubelement (12) und einen Kniehebel (2) aufweist, der ein erstes, zwischen einer ersten Einklapp- und einer ersten Ausklapp-Position klappbares und an dem Gehäuseelement (8) angelenktes Hebelglied (4) und ein zweites, mit dem Hubelement (12) verbindbares Hebelglied (6) aufweist, wobei der Kniehebel (2) derart ausgestaltet ist, dass das Anheben des Hubelements (12) durch eine Klappbewegung aus der Einklapp- in die Ausklapp-Position bewirkbar ist, wobei die Runge (1) ferner ein erstes Betätigungselement (14) aufweist, durch dessen Betätigung das Hubelement (12) absenkbar ist, und wobei das erste Hebelglied (4) zur Betätigung des ersten Betätigungselements (14) ein zweites Betätigungselement (18) aufweist, **dadurch gekennzeichnet, dass** das erste und das zweite Betätigungselement (14, 18) derart angeordnet sind, dass bei einer Klappbewegung des ersten Hebelgliedes (4) aus der ersten Ausklapp-Position in die erste Einklapp-Position das erste Betätigungselement (14) bereits kurz vor Erreichen der Einklapp-Position durch das zweite Betätigungselement (18) betätigt wird.

2. Vorrichtung nach Anspruch 1, **dadurch gekennzeichnet, dass** das erste Betätigungselement (14) als ein nach unten weisender, zur Betätigung relativ zu dem Hubelement (12) nach oben verschiebbarer Zylinderzapfen (16) ausgestaltet ist.

3. Vorrichtung nach Anspruch 1 oder 2, **dadurch gekennzeichnet, dass** das zweite Betätigungselement (18) an dem ersten Hebelglied (4) zwischen einer seine Grundposition bildenden zweiten Ausklapp-Position und einer zweiten Einklapp-Position schwenkbar gelagert ist und einen Steg (20) zum Eingriff mit dem ersten Betätigungselement (14) aufweist.

4. Vorrichtung nach einem der Ansprüche 1 bis 3, **dadurch gekennzeichnet, dass** das zweite Betätigungselement (18) derart angeordnet ist, dass das erste Betätigungselement (14) in der ersten Einklapp-Position betätigbar ist.

5. Vorrichtung nach einem der Ansprüche 1 bis 3, **dadurch gekennzeichnet, dass** das zweite Betätigungselement (18) derart angeordnet ist, dass das erste Betätigungselement (14) in der ersten Einklapp-Position nicht im Betätigungssinne betätigbar ist.

6. Vorrichtung nach Anspruch 1 oder 2, **dadurch gekennzeichnet, dass** das erste Betätigungselement (14) mit einem ersten Ende eines zweigliedrigen Kettenelements (28) verbunden ist, welches an seinem zweiten Ende schwenkbar und gehäusefest angeordnet ist und bei nicht betätigtem ersten Betätigungselement (14) die zwei Kettenglieder (30) gegeneinender V-förmig in Richtung des ersten Hebelglieds (4) verschwenkbar sind, und dass das erste Hebelglied (4) das zweite Betätigungselement (18) bildet, durch welches die verschwenkten Kettenglieder (30) zur Betätigung des ersten Betätigungselements (14) in eine im Wesentlichen längs zueinander ausgerichtete Position drückbar sind.

7. Vorrichtung nach einem der Ansprüche 1 bis 6, **dadurch gekennzeichnet, dass** diese ferner eine einen Betätigungshubweg des ersten Betätigungselements (14) einstellende Justiervorrichtung (24) umfasst.

## Claims

1. Device for lifting and lowering a roof supported on telescopic stakes of a utility vehicle, wherein one stake (1) has a housing element (8), a lifting element (12) that is telescopic relative to the housing element (8), and a knee lever (2) having a first hinged lever member (4) foldable between a first folding and a first unfolding position and hinged to the housing element (8), and a second lever member (6) connectable with the lifting element (12), wherein the knee lever (2) is designed in such a way that lifting the lifting element (12) can be realised with a folding movement from the folding and unfolding position, wherein the stake (1) further has a first actuation element (14), with the actuation of which the lifting element (12) can be lowered, and wherein the first lever member (4) has a second actuation element (18) for actuating the first actuation element (14), **characterised in that** the first and the second actuation element (14, 18) are arranged in such a way that the first actuation element (14) is already actuated shortly before reaching the folding position by the second actuation element (18) during a folding movement of the first lever member (4) from the first unfolding position into the first folding position.

2. Device according to Claim 1, **characterised in that** the first actuation element (14) is designed as a downward facing cylinder spigot (16) that can be displaced upwards for actuation relative to the lifting element (12).

3. Device according to claim 1 or 2, **characterised in that** the second actuation element (18) is pivotably mounted on the first lever member (4) between a second unfolding position forming its base position and a second folding position, and has a bridge (20) for engaging the first actuation element (14).

4. Device according to one of the claims 1 to 3, **characterised in that** the second actuation element (18) is arranged in such a way that the first actuation element (14) can be actuated in the first folding position.

5. Device according to one of the claims 1 to 3, **characterised in that** the second actuation element (18) is arranged in such a way that the first actuation element (14) cannot be actuated in the sense of an actuation in the first folding position.

6. Device according to Claim 1 or 2, **characterised in that** the first actuation element (14) is connected with the first end of a two-member chain element (28), which is pivotably arranged and firmly fitted to the housing at its second end, and **in that** the two chain members (30) can be pivoted against each other in a V-shaped direction towards the first lever member (4) when the first actuation element (14) is not actuated, and that the first lever member (4) forms the second actuation element (18), with which the pivoted chain members (30) can be pressed into a position aligned substantially alongside each other for actuating the first actuation element (14).

7. Device according to one of the claims 1 to 6, **characterised in that** these further comprise an adjusting device (24) setting an actuation stroke of the first actuation element (14).

## Revendications

1. Dispositif de levage et d'abaissement d'un toit, appuyé sur des ranchers télescopiques, d'un véhicule utilitaire, un rancher (1) comprenant un élément de boîtier (8), un élément de levage (12) télescopique par rapport à l'élément de boîtier (8) et une genouillère (2) qui comprend un premier organe de levier (4), pouvant être replié entre une première position rétractée et une première position déployée et articulé par rapport à l'élément de boîtier (8) et un deuxième organe de levier (6), pouvant être relié avec l'élément de levage (12), la genouillère (2) étant conçue de façon à ce que le levage de l'élément de levage (12) puisse être provoqué par un mouvement de repliage de la position rétractée à la position déployée, le rancher (1) comprenant en outre un premier élément d'actionnement (14) par l'actionnement duquel l'élément de levage (12) peut être abaissé, et le premier organe de levier (4) comprenant, pour l'actionnement du premier élément d'actionnement (14), un deuxième élément d'actionnement (18), **caractérisé en ce que** les premier et deuxième éléments d'actionnement (14, 18) sont disposés de façon à ce que, lors d'un mouvement de repliage du premier organe de levier (4) de la première position déployée vers la première position rétractée, le premier élément d'actionnement (14) est actionné un peu avant que la position rétractée ne soit attente par le deuxième élément d'actionnement (18).

2. Dispositif selon la revendication 1, **caractérisé en ce que** le premier élément d'actionnement (14) est conçu comme un tenon cylindrique (16) orienté vers le bas et pouvant être coulissé vers le haut par rapport à l'élément de levage (12) pour l'actionnement.

3. Dispositif selon la revendication 1 ou 2, **caractérisé en ce que** le deuxième élément d'actionnement (18) est monté, sur le premier organe de levier (4), de manière pivotante entre une deuxième position déployée constituant sa position de base et une deuxième position rétractée, et comprend une nervure (20) pour l'emboîtement avec le premier élément d'actionnement (14).

4. Dispositif selon l'une des revendications 1 à 3, **caractérisé en ce que** le deuxième élément d'actionnement (18) est disposé de façon à ce que le premier élément d'actionnement (14) puisse être actionné dans la première position rétractée.

5. Dispositif selon l'une des revendications 1 à 3, **caractérisé en ce que** le deuxième élément d'actionnement (18) est disposé de façon à ce que le premier élément d'actionnement (14) puisse être actionné dans la première position rétractée pas dans le sens de l'actionnement.

6. Dispositif selon la revendication 1 ou 2, **caractérisé en ce que** le premier élément d'actionnement (14) est relié avec une première extrémité d'un élément de chaîne à deux maillons (28), qui est disposé, au niveau de deuxième extrémité, de manière pivotante et solidaire du boîtier et, lorsque le premier élément d'actionnement (14) n'est pas actionné, les deux maillons de chaîne (30) peuvent pivoter l'un par rapport à l'autre en forme de V en direction du premier organe de levier (4), et **en ce que** le premier organe de levier (4) constitue le deuxième élément d'actionnement (18), grâce auquel les maillons de chaîne (30) pivotés peuvent être poussés dans une position orientée globalement longitudinalement entre eux pour l'actionnement du premier élément d'actionnement (14).

7. Dispositif selon l'une des revendications 1 à 6, **caractérisé en ce que** celui-ci comprend en outre un dispositif d'ajustement (24) réglant une course de levage d'actionnement du premier élément d'actionnement (14).
